# EUROPÄISCHE PATENTSCHRIFT

(11) **EP 2 676 331 B1**
(45) Veröffentlichungstag und Bekanntmachung des Hinweises auf die Patenterteilung: **24.08.2016**
(21) Anmeldenummer: 12704261.2
(22) Anmeldetag: 10.02.2012
(51) Int. Cl.: H01R 12/71, H01R 13/66, H01R 13/24

(54) **DIREKTKONTAKTIERUNGSSTECKVERBINDUNG MIT STIRNSEITIGER DIREKTKONTAKTIERUNG**
DIRECT CONTACT PLUG-IN CONNECTION HAVING END FACE DIRECT CONTACT
SYSTÈME DE CONNEXION PAR ENFICHAGE AVEC MISE EN CONTACT DIRECTE SUR LA FACE

(30) Priorität: 17.02.2011 DE 102011004300
(43) Veröffentlichungstag der Anmeldung: 25.12.2013
(73) Patentinhaber: Robert Bosch GmbH, 70442 Stuttgart (DE)
(72) Erfinder: SCHOENFELD, Michael, 70771 Leinfelden-Echterdingen (DE); REHBEIN, Peter, 97291Thuengersheim (DE); STEIN, Juergen, 75428 Illingen (DE); PUETTNER, Achim, 73430 Aalen (DE)
(86) Internationale Anmeldenummer: PCT/EP2012/052320
(87) Internationale Veröffentlichungsnummer: WO 2012/110423

(56) Entgegenhaltungen:
- DE-A1-102008 001 557
- US-A- 5 871 362
- US-A- 6 002 437

## Beschreibung

Die Erfindung geht aus von einer Direktkontaktierungssteckverbindung nach der Gattung des Anspruchs 1.

Steuergeräte bestehen meist aus einer Leiterplatte, auf der elektronische Bauelemente platziert sind, und einem Gehäuse. In Motorsteuergeräten wird auf die Leiterplatte üblicherweise eine Messerleiste montiert, um die elektrische Verbindung zwischen einem Kabelbaumstecker und der Leiterplatte herzustellen. Die Messerleiste stellt somit ein zusätzliches Bauteil bei der Montage des Steuergerätes dar.

Es sind auch so genannte elektrische Direktkontaktierungen bekannt, bei denen die Messerleiste entfällt und die einzelnen Pole des Kabelbaumes direkt auf der Leiterplatte kontaktiert werden. Dazu sind auf der Leiterplatte elektrische Kontaktflächen ("Lands") vorgesehen, die direkt durch Kontaktelemente des Kabelbaumsteckers kontaktiert werden. Die Kontaktflächen einer Direktkontaktierungssteckverbindung sind meist in zwei Reihen angeordnet, nämlich jeweils in einer Reihe auf dem ober- und unterseitigen Leiterplattenrand. Im Gegensatz zu einer Kontaktmesserleiste, die aus mehreren Kontaktreihen bestehen kann, besteht somit bei einer Direktkontaktierungssteckverbindung der Nachteil der geringeren Pinanzahl. Wenn die Möglichkeit schon ausgenutzt ist, auf dem ober- und unterseitigen Leiterplattenrand Kontaktflächen anzubringen, besteht bisher nur die Möglichkeit der Verkleinerung der Pinabstände. Dies wird aber aus Zuverlässigkeitsgründen meist abgelehnt

US-A-5871362 offenbart eine Direktkontaktierungssteckverbindung nach dem Oberbegriff des Anspruchs 1, eine Leiterplatte und einen Direktkontaktierungsstecker, beide für die Direktkontaktierungssteckverbindung.

Die Aufgabe der Erfindung besteht demgegenüber darin, bei einer Direktkontaktierungssteckverbindung der eingangs genannten Art die Anzahl der Kontaktierungen (=Pinanzahl) zu erhöhen.

### Vorteile der Erfindung

Diese Aufgabe wird erfindungsgemäß durch eine stirnseitige Direktkontaktierungssteckverbindung mit den Merkmalen von Anspruch 1 gelöst.

Erfindungsgemäß sind die Kontaktflächen an einem quer zur Steckrichtung der Steckverbindung angeordneten, insbesondere um 90° abgewinkelten Leiterplattenabschnitt vorgesehen, dessen abgewinkelte Breite deutlich größer als die Dicke der Leiterplatte ist. Auf der dadurch zur Verfügung stehenden deutlich größeren Leiterplattenfläche kann eine höhere Anzahl an Kontaktflächen untergebracht werden, die quer zur Steckrichtung liegen und durch die in Steckrichtung vorderen Stirnseiten der Kontaktelemente kontaktiert werden.

Weitere Vorteile und vorteilhafte Ausgestaltungen des Gegenstands der Erfindung sind der Beschreibung, der Zeichnung und den Ansprüchen entnehmbar.

### Zeichnungen

Nachfolgend wird die Erfindung anhand mehrerer in der Zeichnung exemplarisch wiedergegebener Ausführungsbeispiele näher erläutert. Es zeigen:
- Fig. 1: die erfindungsgemäße Direktkontaktierungssteckverbindung zwischen einer Leiterplatte und einem Direktkontaktierungsstecker;
- Fign. 2a, 2b: zwei erfindungsgemäße Varianten einer abgewinkelten Leiterplatte; und
- Fig. 3a bis 3e: verschiedene Varianten von Kontaktelementen des erfindungsgemäßen Direktkontaktierungssteckers.

### Beschreibung der Ausführungsbeispiele

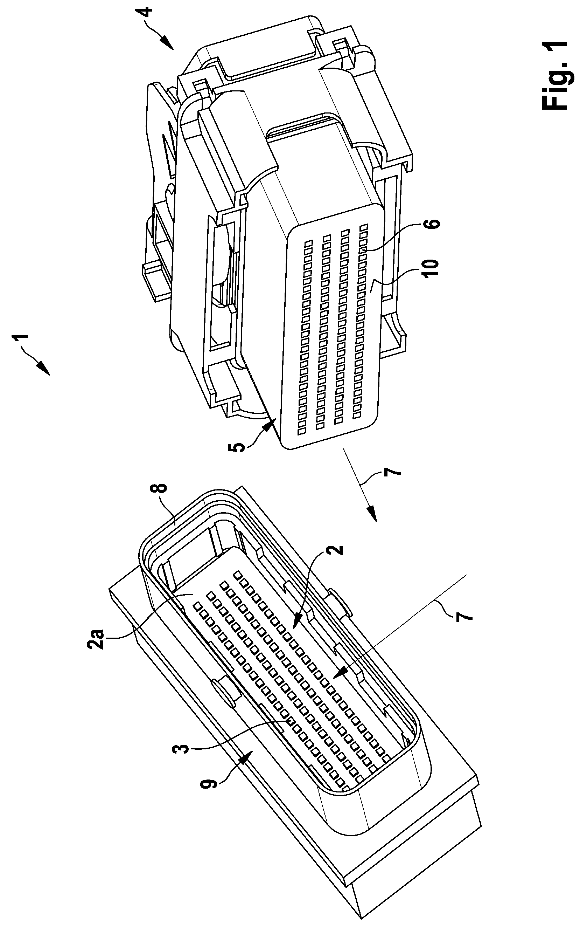

Die in **Fig. 1** gezeigte Steckverbindung **1** umfasst eine Leiterplatte **2,** die auf ihrer einen Seite mehrere Kontaktflächen ("Lands") **3** aufweist, sowie einen mit der Leiterplatte 2 steckverbindbaren Direktkontaktierungsstecker (z.B. Kabelbaumstecker) **4,** der einen Kontaktträger **5** mit mehreren Kontaktelementen **6** zur elektrischen Direktkontaktierung der Kontaktflächen 3 der Leiterplatte 2 aufweist. Der Direktkontaktierungsstecker 4 wird in Steckrichtung **7** in eine Steckaufnahme **8** eines die Leiterplatte 2 aufnehmenden Steuergerätegehäuses **9** eingesteckt.

Die Kontaktflächen 3 sind in mehreren Längsreihen (hier beispielhaft in vier Längsreihen à 25 Kontaktflächen) auf einem rechtwinklig zur Steckrichtung 7 der Steckverbindung 1 angeordneten Leiterplattenabschnitt **2a** vorgesehen. Die Kontaktflächen 3 liegen also rechtwinklig zur Steckrichtung 7 und werden jeweils von den in Steckrichtung 7 vorderen Stirnseiten **6a** der Kontaktelemente 6 kontaktiert, die in Steckrichtung 7 aus dem Kontaktträger 5 hervorragen.

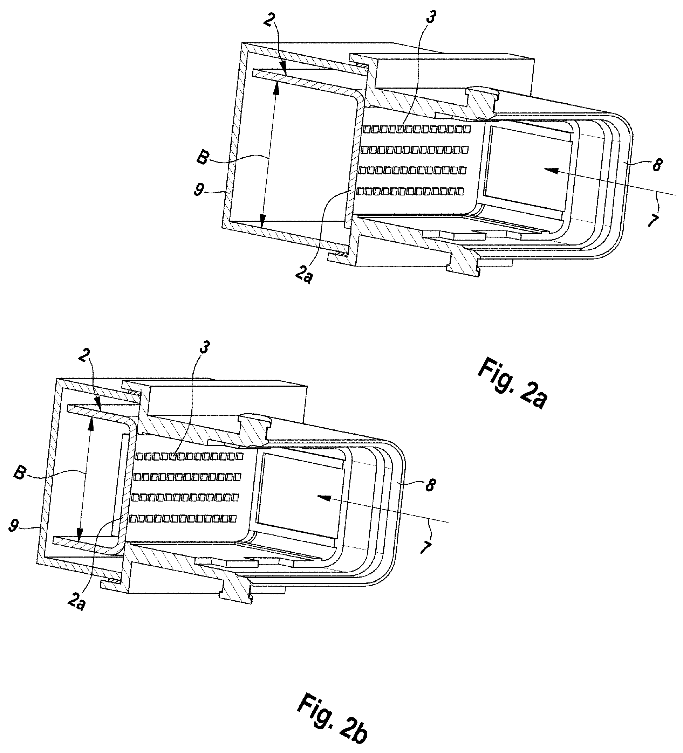

Der Leiterplattenabschnitt 2a kann beispielsweise gegenüber der übrigen Leiterplatte 2 um 90° abgewinkelt sein **(****Fig. 2a****)** oder durch den Mittelschenkel einer U-förmig abwinkelten Leiterplatte 2 gebildet sein **(****Fig. 2b****).** Da die Breite **B** des Leiterplattenabschnitts 2a deutlich größer als die Dicke der Leiterplatte 2 ist, kann auf dem Leiterplattenabschnitt 2a eine sehr viel höhere Anzahl an Kontaktflächen 3 untergebracht werden als auf dem ober- und unterseitigen Leiterplattenrand.

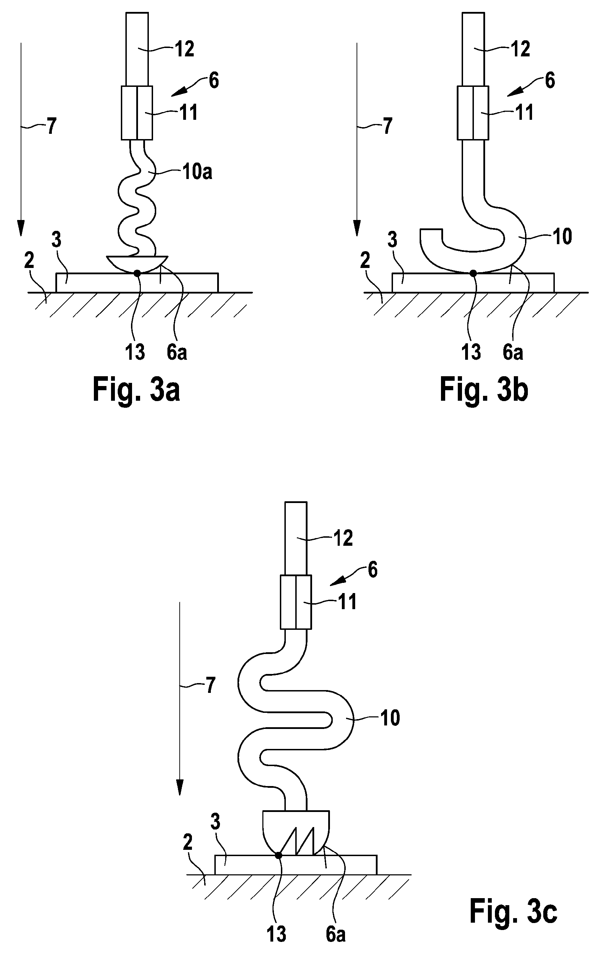

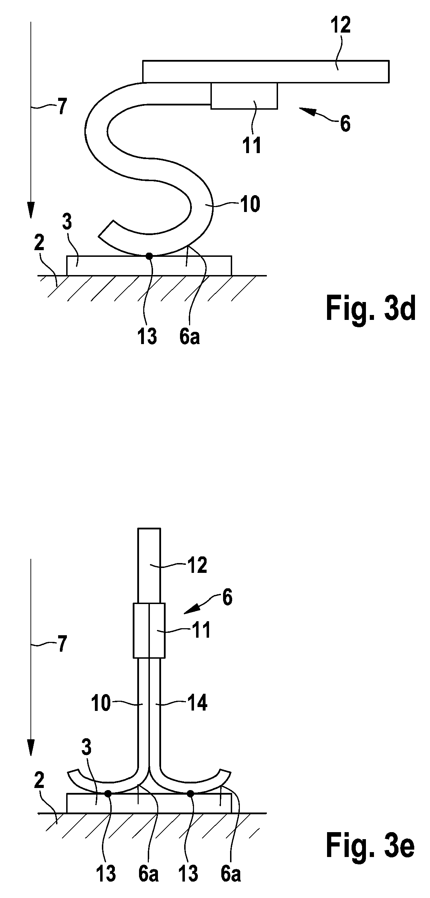

In Fig. 3 sind verschiedene Varianten von metallischen Kontaktelementen 6 des Direktkontaktierungssteckers 4 gezeigt, bei denen der in Steckrichtung 7 vordere Kontaktabschnitt **10** in Steckrichtung 7 federnd, also als Federkontakt, ausgebildet ist. An dem in Steckrichtung 7 hinteren Crimpabschnitt **11** des Kontaktelements 6 ist eine elektrische Leitung **12** des Kabelbaums (nicht gezeigt) elektrisch leitend angebunden, und zwar entweder in Steckrichtung 7 oder quer dazu. Alternativ kann die elektrische Leitung 12 auch an das Kontaktelement 6 angeschweißt sein. Der Kontaktpunkt bzw. die Kontaktpunkte zwischen der vorderen Stirnseite 10 des vordere Kontaktabschnitts 10 und der Kontaktfläche 3 sind mit **13** bezeichnet.

**Fig. 3a** zeigt ein metallisches Kontaktelement 6, dessen vorderer Kontaktabschnitt 10 in Steckrichtung 7 mäander- oder zickzackförmig und daher in Steckrichtung 7 federnd ausgebildet ist. Die vordere Stirnseite 10 liegt an der Kontaktfläche 3 in einem Kontaktpunkt 13 an.

**Fig. 3b** zeigt ein metallisches Kontaktelement 6, dessen vorderer Kontaktabschnitt 10 in Steckrichtung 7 hakenförmig und daher in Steckrichtung 7 federnd ausgebildet ist. Die vordere Stirnseite 10 liegt an der Kontaktfläche 3 in einem Kontaktpunkt 13 an.

**Fig. 3c** zeigt ein metallisches Kontaktelement 6, dessen vorderer Kontaktabschnitt 10 in Steckrichtung 7 wellenförmig und daher in Steckrichtung 7 federnd ausgebildet ist. Die vordere Stirnseite 10 ist stirnseitig gezackt und liegt daher an der Kontaktfläche 3 in mehreren Kontaktpunkten 13 an.

**Fig. 3d** zeigt ein metallisches Kontaktelement 6, dessen vorderer Kontaktabschnitt 10 in Steckrichtung 7 S-förmig und daher in Steckrichtung 7 federnd ausgebildet ist. Die vordere Stirnseite 10 liegt an der Kontaktfläche 3 in einem Kontaktpunkt 13 an.

**Fig. 3e** zeigt ein metallisches Kontaktelement 6, dessen vorderer Kontaktabschnitt 10 durch zwei einenends aneinander geschweißte Kontaktfedern **14** gebildet ist. Die freien Enden der Kontaktfedern 14 sind in entgegengesetzte Richtungen gebogen und liegen an der Kontaktfläche 3 jeweils in einem Kontaktpunkt 13 an.

Statt als Rundleitungen, wie in den Fign. 3a bis 3e gezeigt, können die elektrische Leitungen 12 auch als Flachleitungen ausgebildet sein.

## Patentansprüche

1. Direktkontaktierungssteckverbindung (1) umfassend eine Leiterplatte (2), die auf ihrer einen Seite Kontaktflächen (3) aufweist, und umfassend einen mit der Leiterplatte (2) steckverbindbaren Direktkontaktierungsstecker (4), der Kontaktelemente (6) zur elektrischen Direktkontaktierung der Kontaktflächen (3) der Leiterplatte (2) aufweist,
wobei die Kontaktflächen (3) auf einem quer zur Steckrichtung (7) des Direktkontaktierungssteckers (4) verlaufenden Leiterplattenabschnitt (2a) vorgesehen sind und wobei die Kontaktelemente (6) jeweils mit ihrer in Steckrichtung (7) vorderen Stirnseite (6a) die Kontaktflächen (3) kontaktieren,
**dadurch gekennzeichnet, dass**
der Leiterplattenabschnitt (2a) gegenüber der übrigen Leiterplatte (2) abgewinkelt ist.

2. Direktkontaktierungssteckverbindung nach Anspruch 1, **dadurch gekennzeichnet, dass** der Leiterplattenabschnitt (2a) durch den Mittelschenkel einer doppelt abgewinkelten Leiterplatte (2) gebildet ist.

3. Direktkontaktierungssteckverbindung nach Anspruch 2, **dadurch gekennzeichnet, dass** der Leiterplattenabschnitt (2a) durch den Mittelschenkel einer U-förmig abwinkelten Leiterplatte (2) gebildet ist.

4. Direktkontaktierungssteckverbindung nach einem der vorhergehenden Ansprüche, **dadurch gekennzeichnet, dass** die Kontaktelemente (6) in Steckrichtung (7) des Direktkontaktierungssteckers (4) federnd ausgebildet sind.

5. Direktkontaktierungssteckverbindung nach einem der vorhergehenden Ansprüche, **dadurch gekennzeichnet, dass** die Kontaktflächen (3) der Leiterplatte (2) in mehreren Längsreihen auf dem Leiterplattenabschnitt (2a) angeordnet sind.

6. Direktkontaktierungssteckverbindung nach Anspruch 5, **dadurch gekennzeichnet, dass** die Kontaktflächen (3) der Leiterplatte (2) in mindestens drei oder vier Längsreihen auf dem Leiterplattenabschnitt (2a) angeordnet sind

7. Leiterplatte (2) für eine Direktkontaktierungssteckverbindung (1) nach einem der vorhergehenden Ansprüche, wobei die Leiterplatte auf ihrer einen Seite mehrere Kontaktflächen (3) für eine elektrische Direktkontaktierung aufweist, wobei die Kontaktflächen (3) auf einem quer zur Steckrichtung (7) eines Direktkontaktierungsstecker (4) verlaufenden Leiterplattenabschnitt (2a) vorgesehen sind, **dadurch gekennzeichnet, dass**
der Leiterplattenabschnitt (2a) gegenüber der übrigen Leiterplatte (2) abgewinkelt ist.

8. Direktkontaktierungsstecker (4) für eine Direktkontaktierungssteckverbindung (1) nach einem der Ansprüche 1 bis 6, mit mehreren Kontaktelementen (6), deren in Steckrichtung (7) vordere Stirnseiten (6a) zur elektrischen Direktkontaktierung der Kontaktflächen (3) einer Leiterplatte (2) ausgebildet sind, wobei die Kontaktflächen (3) auf einem quer zur Steckrichtung (7) des Direktkontaktierungsstecker (4) verlaufenden Leiterplattenabschnitt (2a) vorgesehen sind, wobei die Kontaktelemente (6) in Steckrichtung (7) federnd ausgebildet sind.

9. Direktkontaktierungsstecker nach Anspruch 8, **dadurch gekennzeichnet, dass** die Kontaktelemente (6) mit einem in Steckrichtung (7) vorderen Kontaktabschnitt (10) ausgebildet sind, wobei der vordere Kontaktabschnitt (10) mäanderförmig oder zick-zack-förmig oder hakenförmig oder wellenförmig oder S-förmig oder durch zwei einenends aneinander geschweißte Kontaktfedern (14) gebildet ist.

## Claims

1. Direct contact-making plug-type connection (1) comprising a printed circuit board (2) which has contact areas (3) on one of its sides, and comprising a direct contact-making plug (4) which can be plug-connected to the printed circuit board (2) and has contact elements (6) for making direct electrical contact with the contact areas (3) of the printed circuit board (2),
wherein the contact areas (3) are provided on a printed circuit board section (2a) which runs transverse to the plug-in direction (7) of the direct contact-making plug (4), and wherein the contact elements (6) each make contact with the contact areas (3) by way of their front end side (6a) in the plug-in direction (7), **characterized in that**
the printed circuit board section (2a) is angled in relation to the rest of the printed circuit board (2).

2. Direct contact-making plug-type connection according to Claim 1, **characterized in that** the printed circuit board section (2a) is formed by the central limb of a double-angled printed circuit board (2).

3. Direct contact-making plug-type connection according to Claim 2, **characterized in that** the printed circuit board section (2a) is formed by the central limb of a printed circuit board (2) which is angled in a U-shaped manner.

4. Direct contact-making plug-type connection according to one of the preceding claims, **characterized in that** the contact elements (6) are designed with a spring action in the plug-in direction (7) of the direct contact-making plug (4).

5. Direct contact-making plug-type connection according to one of the preceding claims, **characterized in that** the contact areas (3) of the printed circuit board (2) are arranged in a plurality of longitudinal rows on the printed circuit board section (2a).

6. Direct contact-making plug-type connection according to Claim 5, **characterized in that** the contact areas (3) of the printed circuit board (2) are arranged in at least three or four longitudinal rows on the printed circuit board section (2a).

7. Printed circuit board (2) for a direct contact-making plug-type connection (1) according to one of the preceding claims, wherein the printed circuit board has a plurality of contact areas (3) for direct electrical contact-making purposes on one side, wherein the contact areas (3) are provided on a printed circuit board section (2a) which runs transverse to the plug-in direction (7) of a direct contact-making plug (4), **characterized in that**
the printed circuit board section (2a) is angled in relation to the rest of the printed circuit board (2).

8. Direct contact-making plug (4) for a direct contact-making plug-type connection (1) according to one of Claims 1 to 6, having a plurality of contact elements (6), the end sides (6a) of the said contact elements which are at the front in the plug-in direction (7) being designed for making direct electrical contact with the contact areas (3) of a printed circuit board (2), wherein the contact areas (3) are provided on a printed circuit board section (2a) which runs transverse to the plug-in direction (7) of the direct contact-making plug (4), wherein the contact elements (6) are designed with a spring action in the plug-in direction (7).

9. Direct contact-making plug according to Claim 8, **characterized in that** the contact elements (6) are formed with a contact section (10) which is at the front in the plug-in direction (7), wherein the front contact section (10) is formed in a meandering manner or in a zigzag manner or in the manner of a hook or in an undulating manner or in the shape of an S or by two contact springs (14) which are welded to one another at one end.

## Revendications

1. Connexion par enfichage à mise en contact directe (1) comprenant une carte de circuits imprimés (2), laquelle présente des surfaces de contact (3) sur un de ses côtés, et comprenant un connecteur de mise en contact directe (4) pour être relié par enfichage à la carte de circuits imprimés (2), lequel présente des éléments de contact (6) pour la mise en contact électrique directe des surfaces de contact (3) de la carte de circuits imprimés (2),
dans laquelle les surfaces de contact (3) sont prévues sur une partie de carte de circuits imprimés (2a) s'étendant transversalement à la direction d'enfichage (7) du connecteur de mise en contact directe (4) et dans laquelle les éléments de contact (6) établissent respectivement, avec leur face frontale (6a) antérieure en direction d'enfichage (7), le contact avec les surfaces de contact (3),
**caractérisée en ce que**
la partie de carte de circuits imprimés (2a) est coudée par rapport au reste de la carte de circuits imprimés (2).

2. Connexion par enfichage à mise en contact directe selon la revendication 1, **caractérisée en ce que**
la partie de carte de circuits imprimés (2a) est formée par la branche médiane d'une carte de circuits imprimés (2) coudée de manière double.

3. Connexion par enfichage à mise en contact directe selon la revendication 2, **caractérisée en ce que**
la partie de carte de circuits imprimés (2a) est formée par la branche médiane d'une carte de circuits imprimés (2) coudée en forme de U.

4. Connexion par enfichage à mise en contact directe selon l'une des revendications précédentes,
**caractérisée en ce que** les éléments de contact (6) sont réalisés de manière élastique en direction d'enfichage (7) du connecteur de mise en contact directe (4).

5. Connexion par enfichage à mise en contact directe selon l'une des revendications précédentes,
**caractérisée en ce que** les surfaces de contact (3) de la carte de circuits imprimés (2) sont disposées en plusieurs rangées longitudinales sur la partie de carte de circuits imprimés (2a).

6. Connexion par enfichage à mise en contact directe selon la revendication 5, **caractérisée en ce que** les surfaces de contact (3) de la carte de circuits imprimés (2) sont disposées en au moins trois ou quatre rangées longitudinales sur la partie de carte de circuits imprimés (2a).

7. Carte de circuits imprimés (2) pour une connexion par enfichage à mise en contact directe (1) selon l'une des revendications précédentes, dans laquelle la carte de circuits imprimés présente, sur un de ses côtés, plusieurs surfaces de contact (3) pour une mise en contact électrique directe,
dans laquelle les surfaces de contact (3) sont prévues sur une partie de carte de circuits imprimés (2a) s'étendant transversalement à la direction d'enfichage (7) d'un connecteur de mise en contact directe (4),
**caractérisée en ce que**
la partie de carte de circuits imprimés (2a) est coudée par rapport au reste de la carte de circuits imprimés (2).

8. Connecteur de mise en contact directe (4) pour une connexion par enfichage à mise en contact directe (1) selon l'une des revendications 1 à 6, avec plusieurs éléments de contact (6) dont les faces frontales (6a) antérieures en direction d'enfichage (7) sont réalisées pour la mise en contact électrique directe des surfaces de contact (3) d'une carte de circuit imprimés (2), dans lequel les surfaces de contact (3) sont prévues sur une partie de carte de circuits imprimés (2a) s'étendant transversalement à la direction d'enfichage (7) du connecteur de mise en contact directe (4), dans lequel les éléments de contact (6) sont réalisés de manière élastique en direction d'enfichage (7).

9. Connecteur de mise en contact directe selon la revendication 8, **caractérisé en ce que** les éléments de contact (6) sont réalisés avec une partie de contact (10) antérieure en direction d'enfichage (7), dans lequel la partie de contact antérieure (10) est réalisée en forme de méandres ou en forme de zigzags ou en forme de crochet ou en forme de vagues ou en forme de S ou grâce à deux ressorts de contact (14) soudés ensemble à une extrémité.
